# EUROPEAN PATENT APPLICATION

(11) **EP 2 634 835 A1**
(43) Date of publication of application: **04.09.2013**
(21) Application number: 11870512.8
(22) Date of filing: 02.12.2011
(51) Int. Cl.: H01M 2/10

(54) **BATTERY SYSTEM**

(71) Applicant: Hitachi, Ltd., Chiyoda-ku Tokyo (JP)
(72) Inventor: YAMAUCHI, Shin, Hitachi-shi, Ibaraki 3191292 (JP); TANAKA, Yutaka, Hitachi-shi, Ibaraki 3191292 (JP); INOUE, Takeshi, Hitachi-shi, Ibaraki 3191292 (JP)
(74) Representative: Beetz & Partner
(86) International application number: PCT/JP2011/077972
(87) International publication number: WO 2013/080385

(57) **Abstract**

An objective of the present invention is to provide a space-saving battery system that can safely recover an electrolyte leaked from a battery module.

The battery system of the present invention is a battery system (101) including: battery modules (100) each having a plurality of battery cells (1) ; and a cabinet (31) that houses the battery modules (100), wherein the battery modules (100) each include a battery cell storage portion (17) housing the battery cells (1) and a circuit storage portion (18) placed above the battery cell storage portion (17), the circuit storage portion (18) housing a detection circuit (21) that detects information on the battery cells (1), and the cabinet (31) includes a module placement base (40) on which the battery modules (100) are placed, the module placement base (40) having groove portions (43a, 43b, 44a to 44e) that receive an electrolyte when the electrolyte leaks from the battery modules (100) and an electrolyte receiving hole (45) into which the electrolyte in the groove portions (43a, 43b, 44a to 44e) flows, and a discharge pipe (41) that is connected to the electrolyte receiving hole (45) and discharges the electrolyte into an electrolyte discharge portion (42).

## Description

### Technical Field

The present invention relates to a battery system that houses a plurality of battery modules in a plurality of tiers.

### Background Art

In general, a battery system is used as storage of electric power generated by using natural energy, a power source of a smart grid, and a backup power source of facilities. In addition, by combining a plurality of battery systems, it is possible to construct a megawatt power source.

Incidentally, the battery system used as a power source of a system is required to have a higher energy density because there is a need to assume that the battery system is installed where space is limited. Furthermore, since the battery system is required to operate for long periods, the safety of the battery system as a whole is also required.

In terms of safety, a structure of a battery system that prevents a leakage current from flowing into a box provided with the battery system, even when a battery forming the battery system suffers a breakdown, by receiving an electrolyte leaked from the broken battery with a tray is also proposed (PTL 1) .

### Citation List

### Patent Literature

PTL 1: JP-A-11-16555 (Fig. 1(b), Fig. 2, etc.)

### Summary of Invention

### Technical Problem

However, in the battery system described in PTL 1, since one box is provided with a plurality of trays, the plurality of trays and an electrolyte reservoir portion provided in each tray become dead spaces, preventing the attainment of a higher energy density. Moreover, since the battery module is brought into intimate contact with the side wall of the tray (see Fig. 2 of PTL 1), although the electrolyte leaked from a lower part of the battery module can be adequately recovered, the electrolyte leaked from an upper part of the battery module pours out and cannot be adequately recovered, which becomes a problem. Also, due consideration is not given to the protection of the wiring and the like from the electrolyte when the electrolyte leaks from the upper part of the battery module.

In view of the circumstances described above, an object of the present invention is to provide a space-saving battery system that can recover an electrolyte safely even when the electrolyte leaks from various areas (parts) of a battery module.

### Solution to Problem

A battery system according to claim 1 of the claims of the present invention is a battery system including: battery modules each having a plurality of battery cells; and a cabinet that houses the battery modules, wherein the battery modules each include a battery cell storage portion housing the battery cells and a circuit storage portion placed above the battery cell storage portion, the circuit storage portion housing a detection circuit that detects information on the battery cells, and the cabinet includes a module placement base on which the battery modules are placed, the module placement base having groove portions that receive an electrolyte when the electrolyte leaks from the battery modules and an electrolyte receiving hole into which the electrolyte in the groove portions flows, and a discharge pipe that is connected to the electrolyte receiving hole and discharges the electrolyte into an electrolyte discharge portion.

### Advantageous Effects of Invention

According to the present invention, it is possible to implement a space-saving battery system that can recover an electrolyte safely even when the electrolyte leaks from various areas (parts) of a battery module.

### Brief Description of Drawings

[Fig. 1] Fig. 1(a) is a perspective view of a battery module of a first embodiment according to the present invention, the battery module viewed obliquely from above from the front, and Fig. 1 (b) is a perspective view of the battery module of the first embodiment, the battery module viewed obliquely from above from the rear.
[Fig. 2] Fig. 2(a) is a right side view of the battery module of the first embodiment, and Fig. 2(b) is a rear view of the battery module of the first embodiment.
[Fig. 3] Fig. 3 is an exploded perspective view of the battery module of the first embodiment.
[Fig. 4] Fig. 4 is a circuit diagram of the battery module of the first embodiment.
[Fig. 5] Fig. 5 is a sectional view taken in the direction B-B along an arrow of Fig. 2(a).
[Fig. 6] Fig. 6 is a sectional view taken in the direction C-C along an arrow of Fig. 2(b).
[Fig. 7] Fig. 7 is a sectional view taken in the direction A-A along an arrow of Fig. 2(a).
[Fig. 8] Fig. 8 is a perspective view of a battery system with the battery modules according to the first embodiment.
[Fig. 9] Fig. 9 is an exploded perspective view of the battery system with the battery modules according to the first embodiment.
[Fig. 10] Fig. 10 is a front view of a plurality of battery modules arranged in a state in which the battery modules are placed in the battery system of the first embodiment.
[Fig. 11] Fig. 11 is a perspective view of the plurality of battery modules viewed obliquely from above from the front, the battery modules arranged in a state in which the battery modules are placed in the battery system of the first embodiment.
[Fig. 12] Fig. 12 is a perspective view of the plurality of battery modules of the first embodiment, the battery modules viewed obliquely from above from the rear.
[Fig. 13] Fig. 13 is a diagram showing the internal structure of a rack in which the battery modules of the first embodiment are placed.
[Fig. 14] Fig. 14 is a perspective view of a module placement base of the first embodiment, the module placement base viewed obliquely from above.
[Fig. 15] Fig. 15 is an enlarged view of a D portion of Fig. 14.
[Fig. 16] Fig. 16 is a perspective view showing a module placement base of Modified Example 1.
[Fig. 17] Fig. 17 is a perspective view showing a module placement base of Modified Example 2.
[Fig. 18] Fig. 18 is a perspective view showing a module placement base of a second embodiment.
[Fig. 19] Fig. 19 is a perspective view showing a battery system of a third embodiment.
[Fig. 20] Fig. 20 is a perspective view of a battery system of a fourth embodiment.
[Fig. 21] Fig. 21 is an enlarged perspective view showing a module placement base and an adjacent module placement base of the fourth embodiment.
[Fig. 22] Fig. 22 (a) is a perspective view showing a rack of a fifth embodiment, and Fig. 22(b) is a perspective view showing a module placement base of the fifth embodiment.
[Fig. 23] Fig. 23 is a perspective view showing a state in which five tiers of module placement bases are firmly fixed to the rack of the fifth embodiment.
[Fig. 24] Fig. 24 is a perspective view showing a battery system of the fifth embodiment.

### Description of Embodiments

Hereinafter, embodiments of the present invention will be described with reference to accompanying drawings.

### (First Embodiment)

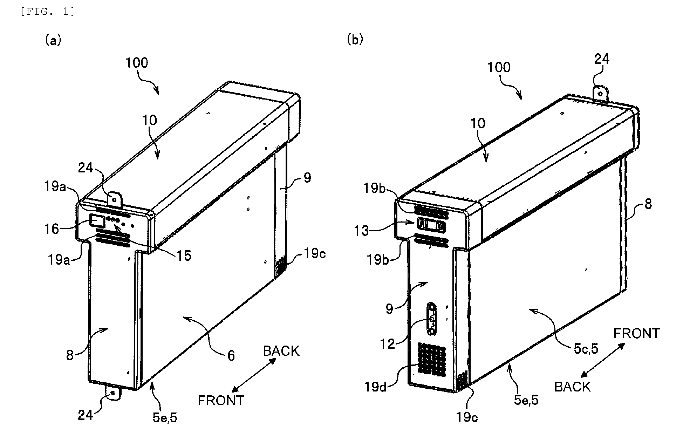

In Fig. 1, a perspective view of a battery module 100 of a first embodiment according to the present invention is shown. In Fig. 1(a), a perspective view of the battery module 100 viewed obliquely from above from the front is shown, and, in Fig. 1(b), a perspective view of the battery module 100 viewed obliquely from above from the rear is shown.

The battery module 100 is covered with a housing forming an outer wall, whereby the inside of the battery module 100 is protected from an external impact or the like.
On a top face part and a side wall upper part of the battery module 100, a housing upper part 10 formed as a widened part of the housing is provided.
On the front (the front side of Fig. 1(a)) of the battery module 100, a housing front face part 8 forming part of the housing is formed roughly in the shape of the letter T in a front view.
In an upper part of the housing front face part 8, an indicator 15, a debug connector 16, and a ventilation opening 19a for heat dissipation are provided.

The debug connector 16 is an electrical connection with an external information processor. To the debug connector 16, the external information processor is connected when the rewriting or writing (update) of an upgrade or the like of software (such as a control program product) of a microcontroller implemented on a voltage detection substrate 7, which will be described later, is required or when the reading of stored information (such as battery characteristic information or usage history information) stored in the microcontroller or memory is required.

The rewriting, writing, and reading performed by the external information processor are performed at the time of initial installation (setting) of the battery module 100 or maintenance of the battery module 100 by a serviceman.
The indicator 15 indicates the state of the battery module 100, for example, the state such as operating, a sleep state, or the occurrence of abnormalities. In upper and lower portions of the housing front face part 8, stoppers 24, each having a screw insertion hole for fixing, for fixing the battery module 100 are provided.

On the rear face of the battery module 100 shown in Fig. 1(b), a housing rear face part 9 forming part of the housing is formed roughly in the shape of the letter T in a rear view.
In an upper part of the housing rear face part 9, a communication connection terminal 13 by which a signal is transmitted and received and a ventilation opening 19b for heat dissipation are provided. In a middle part of the housing rear face part 9, a power connection terminal 12 through which a charge/discharge current flows is provided. In a lower part of the housing rear face part 9, ventilation openings 19c and 19d for heat dissipation are provided. The opening 19d is formed rearward, and the opening 19c is formed laterally.

On the right side of the housing front face part 8 viewed from the front of the battery module 100 of Fig. 1(a), a housing side face lower part 6 forming part of the housing is provided, and, on the left side, that is, on the right side (see Fig. 1(b)) of the housing rear face part 9 viewed from the rear of the battery module 100, a housing side face lower part 5c forming part of the housing is provided. On the bottom face of the battery module 100, a housing bottom face part 5e forming part of the housing is provided.

As described above, the housing of the battery module 100 has the housing upper part 10, the housing front face part 8, the housing rear face part 9, the housing side face lower parts 6 and 5c, and the housing bottom face part 5e, and is produced by performing press working on an anticorrosive steel sheet or the like. Incidentally, the housing may be formed of reinforced plastic or the like, and the material thereof is not limited to a particular material.

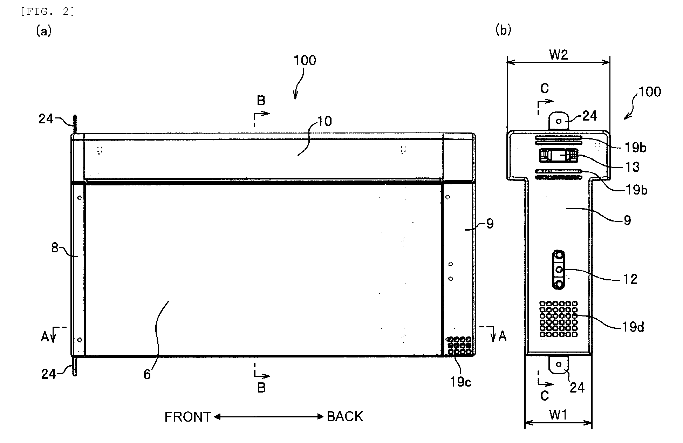

In Fig. 2(a), a right side view of the battery module 100 of the first embodiment is shown, and, in Fig. 2 (b), a rear view of the battery module 100 of the first embodiment is shown.
In a side view, the size of the housing rear face part 9 in the front-back direction is formed to be greater than the size of the housing front face part 8 in the front-back direction.
As described earlier, the housing rear face part 9 takes roughly the shape of the letter T in a rear view, and the width W2 of the upper part of the housing rear face part 9 is formed to be greater than the width W1 of the middle part and the lower part of the housing rear face part 9.

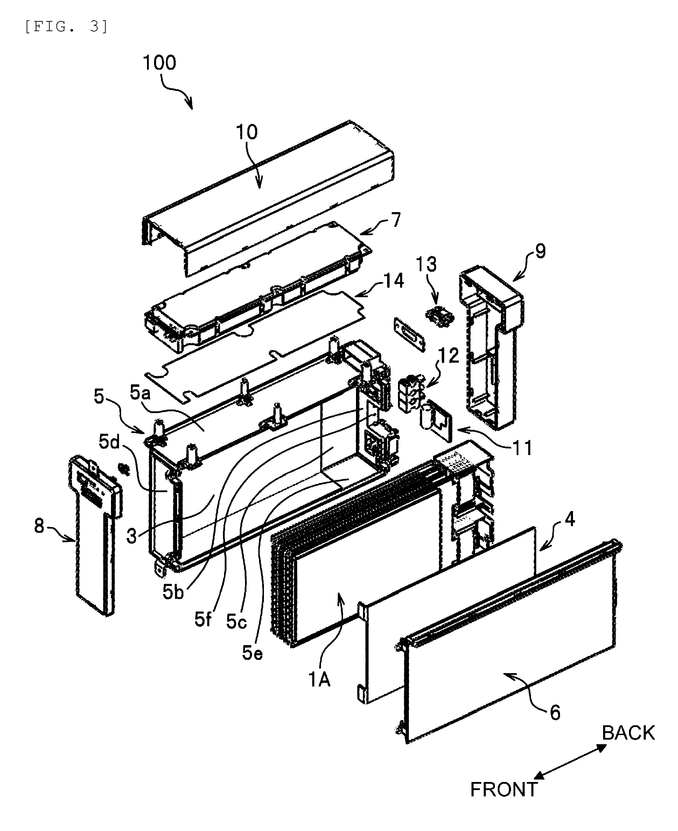

In Fig. 3, an exploded perspective view of the battery module 100 of the first embodiment is shown.
The battery module 100 has a metal case 5 (see Fig. 1) forming part of the housing and a metal case lid 6 (see Fig. 1) closing a right side opening of the metal case 5. The metal case lid 6 doubles as the above-described housing side face lower part 6 forming part of the housing.

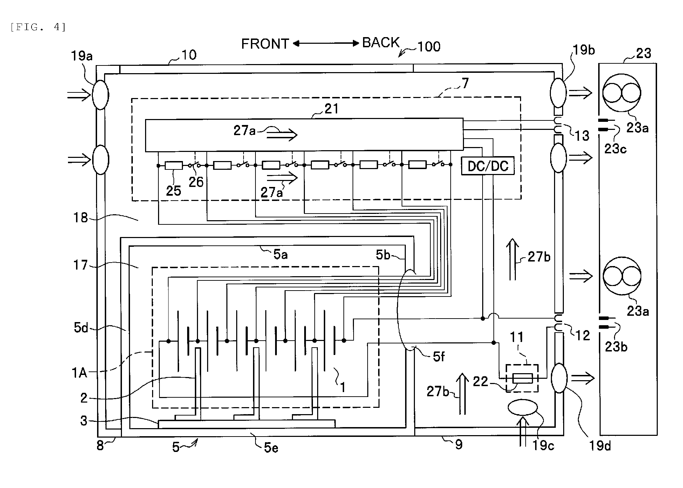

In Fig. 4, a circuit diagram of the battery module 100 of the first embodiment is shown. Incidentally, Fig. 4 is deformed, and a substrate storage chamber 18 is exaggerated to make it larger than it is.
By closing the metal case 5 with the metal case lid 6, it is possible to make an internal space thereof (a cell group storage chamber 17) airtight except for a hole 5f of a front-back separation wall 5b forming a metal case back wall. In the internal space (the cell group storage chamber 17), a battery cell group 1A having a plurality of battery cells 1 and cushioning members 3 and 4 (see Fig. 3) which are the shock-absorbing material of the battery cells 1 are housed.

The battery cell group 1A is first covered with the cushioning members 3 and 4, and the cushioning members 3 and 4 are covered with the metal case 5 and the metal case lid 6. The cushioning members 3 and 4 play roles in cushioning (attenuating or absorbing) an external impact or the like on the battery module 100, absorbing the thermal expansion of the battery cells 1, and facilitating heat transfer.

As described earlier, the metal case 5 has an opening in the right side thereof, and, on this opening in the right side, the metal case lid 6 is placed.
The metal case 5 has a vertical separation wall 5a forming a case top face part, the front-back separation wall 5b forming a case rear face part, the housing side face lower part 5c forming a left-side case side face part, a case front face part 5d, and the housing bottom face part (case bottom face part) 5e forming a case bottom face part. In the front-back separation wall 5b of the case rear face part, the hole 5f for dissipating heat generated by an electrochemical reaction in the plurality of battery cells 1 is formed in such a way as to penetrate the wall.

As shown in Fig. 3, immediately above the vertical separation wall 5a forming an upper wall of the metal case 5, an insulating sheet 14 for insulating the battery cell group 1A is placed. Above the insulating sheet 14 located above the vertical separation wall 5a, a detection circuit substrate 7 for detecting and controlling the voltage of the battery cell group 1A (the battery cells 1) is placed. The housing upper part 10 is fixed to the vertical separation wall 5a to cover both the sides and the top of the detection circuit substrate 7.

The detection circuit substrate 7 is placed inside the internal space (the substrate storage chamber 18 of Fig. 4) surrounded with the vertical separation wall 5a and the housing upper part 10. Incidentally, as described earlier, Fig. 4 is deformed, and the substrate storage chamber 18 is exaggerated to make it larger than it is. The front of the internal space (the substrate storage chamber 18 of Fig. 4) is closed with the housing front face part 8, and the rear is closed with the housing rear face part 9.

The housing front face part 8 covers the case front face part 5d on the front side. The housing rear face part 9 covers the front-back separation wall 5b on the rear side. Inside the internal space (the substrate storage chamber 18 of Fig. 4) surrounded with the front-back separation wall 5b of the case rear face part and the housing rear face part 9, a protection circuit substrate 11, the power connection terminal 12, and the communication connection terminal 13 are placed. The internal space (the substrate storage chamber 18 of Fig. 4) is zoned by the vertical separation wall 5a of the case top face part, the front-back separation wall 5b of the case rear face part, the housing front face part 8, the housing rear face part 9, and the housing upper part 10. In the internal space (the substrate storage chamber 18 (see Fig. 4)), as described earlier, the detection circuit substrate 7, the protection circuit substrate 11, the power connection terminal 12, and the communication connection terminal 13 are provided.

The battery module 100 includes the battery cell group 1A formed of the plurality of battery cells 1. In Fig. 4, a case in which there are six battery cells 1 is illustrated.
In Fig. 4, a case in which the battery cells 1 are connected in series is illustrated, but the connection is not limited thereto. Parallel connection may be adopted or serial connection and parallel connection may be combined. A negative (-) pole of the battery cell group 1A in which the plurality of battery cells 1 are connected is connected to one end of the power connection terminal 12. A positive (+) pole of the battery cell group 1A in which the plurality of battery cells 1 are connected is connected to one terminal of a protection circuit (fuse) 22 for protecting the battery cell group 1A from a large current which is greater than a rated current. The other terminal of the protection circuit (fuse) 22 is connected to the other end of the power connection terminal 12.

The protection circuit (fuse) 22 generates heat and rises in temperature when a large current which is greater than a rated current flows therethrough, and melts and interrupts the current when the temperature is increased to a temperature higher than a predetermined temperature. That is, the temperature of the protection circuit (fuse) 22 is increased by Joule heat, to a temperature at which the protection circuit (fuse) 22 does not melt, even by a current under normal use which is smaller than a rated current.

In the past, when the temperature of the protection circuit (fuse) 22 was increased in such a temperature range, the charge/discharge characteristics of some battery cells 1 (a part) of the plurality of battery cells 1 were degraded (changed), which made the charge/discharge characteristics of the plurality of battery cells 1 tend to vary.
However, according to the first embodiment, since the protection circuit substrate 11 having the protection circuit (fuse) 22 can be cooled, which will be described later, it is possible to suppress an increase in the temperature of the protection circuit substrate 11 by cooling the protection circuit (fuse) 22 even when the protection circuit (fuse) 22 generates heat.

The negative (-) pole and the positive (+) pole of the battery cell group 1A are connected to a DC/DC converter provided in the detection circuit substrate 7. The DC/DC converter is connected to a voltage detection circuit 21 provided in the detection circuit substrate 7. The voltage detection circuit 21 is supplied with predetermined transformed electric power from the battery cell group 1A via the DC/DC converter. To the voltage detection circuit 21, the communication connection terminal 13 is connected. The voltage detection circuit 21 is connected to an external wiring substrate 23 of an external device via the communication connection terminal 13, and can communicate with the external wiring substrate 23 and transmit and receive an electric signal to and from the external wiring substrate 23.

The negative (-) pole and the positive (+) pole of each battery cell 1 of the battery cell group 1A are connected to the voltage detection circuit 21. Between the negative (-) pole and the positive (+) pole of each battery cell 1, a balancing resistor 25 that makes the voltages of the battery cells 1 balance with one another and a switch 26 are connected in series. On/off of the switch 26 is performed by the voltage detection circuit 21.
The voltage detection circuit 21 measures the voltage of each battery cell 1. Based on the detection results, the voltage detection circuit 21 calculates variations (deviation) in the voltages of the plurality of battery cells 1 of the battery cell group 1A. When the variations (deviation) exceed a predetermined value, the voltage detection circuit 21 extracts at least one battery cell 1 from the plurality of battery cells 1 of the battery cell group 1A in descending order of voltage.

The voltage detection circuit 21 turns on the switch 26 connected between the negative (-) pole and the positive (+) pole of the extracted battery cell 1, passes the current from the extracted battery cell 1 through the balancing resistor 25, and makes the balancing resistor 25 consume electric power. The voltage detection circuit 21 passes the current until the voltage of the extracted battery cell 1 becomes equal to the voltage of one of the battery cells 1 which were not extracted. By doing so, it is possible to reduce the variations (deviation) in the voltages of the plurality of battery cells 1 of the battery cell group 1A and improve the charge/discharge characteristics.

When the balancing resistor 25 is made to consume electric power, the balancing resistor 25 generates heat and rises in temperature. In the past, it has been considered that, when the temperature of the inside of the detection circuit substrate 7 is locally increased due to heat generation of the balancing resistor 25, the temperatures of some battery cells 1 (a part) of the plurality of battery cells 1 are increased, the charge/discharge characteristics are degraded (changed), and the charge/discharge characteristics of the plurality of battery cells 1 tend to vary. However, according to the first embodiment, since the detection circuit substrate 7 can be cooled, which will be described later, it is possible to suppress a rise in the temperature of the balancing resistor 25, that is, a local rise in the temperature of the inside of the detection circuit substrate 7 by cooling the balancing resistor 25 even when the balancing resistor 25 generates heat.

As described earlier, the battery module 100 has the housing (8, 9, 10, 5e, and the like) formed of the housing front face part 8, the housing rear face part 9, the housing upper part 10, the housing bottom face part 5e, and the like that form an outer shell. The housing (8, 9, 10, 5e, and the like) houses, as shown in Fig. 4, the battery cell group 1A, the detection circuit substrate 7, and the protection circuit substrate 11. The internal space of the housing (8, 9, 10, 5e, and the like) is separated into the cell group storage chamber 17 located inside and the substrate storage chamber 18 located outside by the vertical separation wall 5a, the front-back separation wall 5b, and the case front face part 5d.

Since the vertical separation wall 5a is provided between the battery cell group 1A and the detection circuit substrate 7, heat transfer by convection or radiation between the battery cell group 1A and the detection circuit substrate 7 is suppressed, making it possible to prevent movement of heat between the battery cell group 1A and the detection circuit substrate 7.
Moreover, since the front-back separation wall 5b is provided between the battery cell group 1A and the protection circuit substrate 11, heat transfer by convection or radiation between the battery cell group 1A and the protection circuit substrate 11 is suppressed except for the hole 5f, making it possible to prevent movement of heat between the battery cell group 1A and the protection circuit substrate 11. The cell group storage chamber 17 and the substrate storage chamber 18 located outside the cell group storage chamber 17 communicate with each other via the hole 5f formed in the front-back separation wall 5b.

The battery cell group 1A is placed in the cell group storage chamber 17. In the substrate storage chamber 18 placed outside the cell group storage chamber 17, the detection circuit substrate 7, the protection circuit substrate 11, and the power connection terminal 12 are placed. Therefore, the wiring between the battery cell group 1A and the detection circuit substrate 7, the wiring between the battery cell group 1A and the protection circuit substrate 11, and the wiring between the battery cell group 1A and the power connection terminal 12 are routed by being placed through the hole 5f.

The cell group storage chamber 17 is separated from the external space by the metal case 5 (such as 5a, 5b, 5d, and 5e including the metal case lid 6 of Fig. 3). Since the battery cell group 1A is placed in the metal case 5 (such as 5a, 5b, 5d, and 5e including the metal case lid 6) having an integral structure, it is possible to protect the battery cell group 1A reliably even when a strong external force is exerted thereon.
Moreover, the cell group storage chamber 17 is provided with cell chamber heat dissipation portions 2 and 3 in which a large dissipation area is formed from which heat is dissipated to the outside of the cell group storage chamber 17.

The cell chamber heat dissipation portions 2 and 3 have heat exchanger plates 2 sandwiched between the plurality of battery cells 1 and the cushioning members 3 and 4 (see the cushioning member 4 of Fig. 3) thermally connecting the heat exchanger plates 2 and part (the housing bottom face part 5e) of the housing (8, 9, 10, 5e, and the like). The heat generated in the battery cell group 1A is transferred to the housing 5e and the like via the heat exchanger plates 2 and the cushioning members 3 and 4 and is dissipated to the outside of the cell group storage chamber 17 from the housing 5e. This makes it possible to suppress a rise in temperature caused by heat generation of the battery cell group 1A. Incidentally, it is desirable that the metal case 5 (such as 5a, 5b, 5d, and 5e (including the metal case lid 6 of Fig. 3)) is formed of metal material such as aluminum, an aluminum alloy, or iron from the viewpoint of heat transfer and heat dissipation, but the material of the metal case 5 is not limited thereto and the metal case 5 may be molded of synthetic resin.

In the substrate storage chamber 18, the detection circuit substrate 7 and the protection circuit substrate 11 are placed, and substrate chamber heat dissipation portions (19a, 19b, 19c, 19d) which are ventilation holes that dissipate the heat generated in the detection circuit substrate 7 and the protection circuit substrate 11 to the outside of the substrate storage chamber 18 are provided.

The substrate chamber heat dissipation portions (19a, 19b, 19c, 19d) are formed as openings provided in part (the housing front face part 8, the housing rear face part 9) of the housing (8, 9, 10, 5e, and the like). By convecting the air inside the substrate storage chamber 18 and the outside air via the openings (substrate chamber heat dissipation portions) 19a, 19b, 19c, and 19d, it is possible to dissipate the heat generated in the detection circuit substrate 7 and the protection circuit substrate 11 to the outside of the substrate storage chamber 18 by using the air.

The battery cell group 1A is placed in a lower part of the battery module 100. Therefore, the cell group storage chamber 17 housing the battery cell group 1A is placed in the lower part of the battery module 100. The detection circuit substrate 7 is placed in an upper part of the battery module 100, and the protection circuit substrate 11 is placed in a rear part (the right side of Fig. 4) of the battery module 100. As a result, the substrate storage chamber 18 is placed in the shape of a hook (in the shape of a mirror image of a capital L of the alphabet) from the upper part to the rear part of the battery module 100.

That is, the substrate storage chamber 18 is placed above the cell group storage chamber 17 with the vertical separation wall 5a located between them, the vertical separation wall 5a placed on the lower side, and is placed on the side of the cell group storage chamber 17 with the front-back separation wall 5b located between them, the front-back separation wall 5b provided on the lower side in a standing manner.
As described above, the detection circuit substrate 7 is placed above the battery cell group 1A with the vertical separation wall 5a located between them, and the protection circuit substrate 11 is placed in back of the battery cell group 1A with the front-back separation wall 5b placed between them. Since the detection circuit substrate 7 is located above the battery cell group 1A, even when an electrolyte leaks in the battery cell group 1A, the electrolyte flows downward, preventing the electrolyte from getting on the detection circuit substrate 7.

As shown in Figs. 1 and 4, the openings (substrate chamber heat dissipation portions) 19a, 19b, 19c, and 19d have a first opening 19a of the housing front face part 8, a second opening 19b of the housing rear face part 9, and third openings 19c and 19d of the housing rear face part 9.
The first opening 19a is formed in an upper part of the housing front face part 8 and faces the front of the battery module 100. The first opening 19a is provided in an upper part in front of the substrate storage chamber 18.

The second opening 19b is formed in an upper part of the housing rear face part 9 and faces the rear of the battery module 100. The second opening 19b is provided in an upper part in back of the substrate storage chamber 18.
The first opening 19a, the detection circuit substrate 7, and the second opening 19b are placed at almost the same level and are placed on a nearly straight line which is nearly horizontal. When the outside air (the air) flows in through the first opening 19a and flows out through the second opening 19b, on a flow passage (air passage) 27a (indicated with an arrow outline with a blank inside of Fig. 4) through which the air flows from the first opening 19a to the second opening 19b, the detection circuit substrate 7 is placed.

As a result of the air from the outside drawing heat from the detection circuit substrate 7 while being replaced with another, a rise in the temperature of the detection circuit substrate 7 can be suppressed. Incidentally, the external wiring substrate 23 may be placed behind the battery module 100 to generate a flow of air (wind) forcedly on the air passage 27a by a fan 23 provided in the external wiring substrate 23. This makes it possible to further increase the effect of suppression of a rise in the temperature of the detection circuit substrate 7.

The third openings 19c and 19d are formed in a lower part of the housing rear face part 9 and are provided in a lower part in back of the substrate storage chamber 18.
As shown in Fig. 1(b), the third opening 19c is formed in the side of the battery module 100, and the third opening 19d is formed in the rear of the battery module 100. As shown in Fig. 4, the third opening 19c is placed in a position lower than the protection circuit substrate 11. The third opening 19d is placed at almost the same level as the protection circuit substrate 11.

When heat is generated in the protection circuit substrate 11, the surrounding air is warmed, the kinetic energy of a gas molecule of the air is increased, the air expands, the density of the gas molecule is reduced, and the specific gravity becomes lower, whereby an upward flow is generated. With this upward flow, an upward air passage 27b (an arrow outline with a blank inside of Fig. 4) is formed. The upstream side of the air passage 27b is formed as a result of the outside air (the air) flowing in upwardly through the third opening 19c. The downstream side of the air passage 27b is formed as a result of the air flowing out through the second opening 19b.

As described above, when the upward air passage 27b is formed and the outside air (the air) is sucked in through the third opening 19c, the flow passage 27b through which the air sucked in through the third opening 19c flows out through the third opening 19d is also formed. As a result of the air drawing heat from the protection circuit substrate 11 while being replaced with another, a rise in the temperature of the protection circuit substrate 11 can be suppressed.

Incidentally, it can be considered that, for the air passage 27a from the front to the rear in the upper part of the substrate storage chamber 18, not only the first opening 19a in the front upper part and the second opening 19b in the rear upper part but also the housing upper part 10 and the vertical separation wall 5a in an upper part of the cell group storage chamber 17, the housing upper part 10 and the vertical separation wall 5a placed around the air passage 27a, also function as a guide that guides the air passage 27a on a straight line from the front to the rear.

Similarly, it can be considered that, for the upward air passage 27b in the rear part of the substrate storage chamber 18, not only the third opening 19c in the lower part and the second opening 19b in the upper part but also the housing rear face part 9 and the front-back separation wall 5b which is the rear wall of the cell group storage chamber 17, the housing rear face part 9 and the front-back separation wall 5b placed around the air passage 27b, also function as a guide that guides the air passage 27b upwardly on a straight line.

Moreover, as a result of the air flowing upwardly through the air passage 27b being drawn to (sucked in) the air passage 27a in the front-back direction by the air flowing through the air passage 27a from the front to the rear, the rate of flow of air flowing through the air passage 27b is increased.
Furthermore, the opening shapes, sizes, and opening positions of the first opening 19a, the second opening 19b, and the third openings 19c and 19d may be changed in accordance with the cooling capacity that is considered to be required in the detection circuit substrate 7 in the upper part and the protection circuit substrate 11 in the rear part, the air volume supplied from the fan 23a of the external wiring substrate 23, and the temperature, humidity, and the like of the outside air.

Incidentally, the housing front face part 8, the housing rear face part 9, and the housing upper part 10 shown in Fig. 1 can be molded of synthetic resin, but the material is not limited thereto. With consideration given to heat transfer and heat dissipation in addition to air cooling for more efficient cooling, the housing front face part 8, the housing rear face part 9, and the housing upper part 10 may be formed of metal material with high thermal conductivity such as aluminum or iron.

The battery module 100 has, in the housing rear face part 9 forming a rear face, the power connection terminal 12 and the communication connection terminal 13. The power connection terminal 12 is attached to or removed from a power connection terminal 23b of the external wiring substrate 23 and makes it possible to connect the battery cell group 1A to the external wiring substrate 23.
The communication connection terminal 13 is attached to or removed from a power connection terminal 23c of the external wiring substrate 23 and makes it possible to connect the voltage detection circuit 21 to the external wiring substrate 23.

The direction in which the power connection terminal 12 is attached and removed and the direction in which the communication connection terminal 13 is attached and removed coincide with each other, and these directions are parallel to (coincide with) the front-back direction of the battery module 100.
The power connection terminal 12 and the communication connection terminal 13 are provided in the housing rear face part 9 forming the rear face of the battery module 100. On the other hand, the power connection terminal 23b and the communication connection terminal 23c of the external wiring substrate 23 are provided on a front face which is one plane of the external wiring substrate 23.

With this structure, only by sliding the battery module 100 backward, it is possible to connect the power connection terminal 12 to the power connection terminal 23b of the external wiring substrate 23 and connect the communication connection terminal 13 to the communication connection terminal 23c of the external wiring substrate 23.
Conversely, only by sliding the battery module 100 frontward, it is possible to disconnect the power connection terminal 12 from the power connection terminal 23b and disconnect the communication connection terminal 13 from the communication connection terminal 23c.

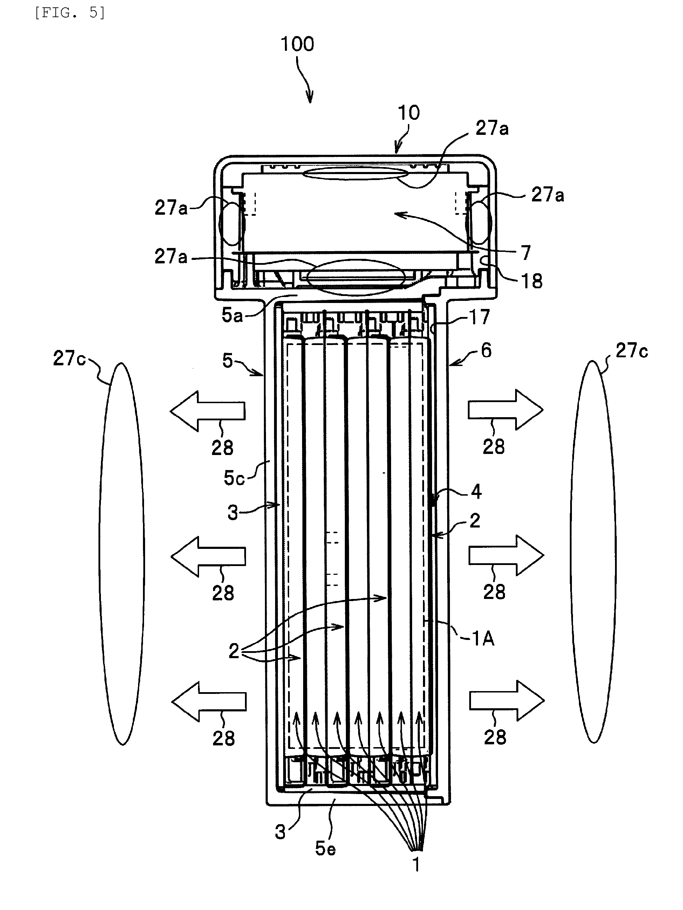

In Fig. 5, a sectional view taken in the direction B-B along an arrow of Fig. 2 (a) is shown. In an example shown in Fig. 2 (a), as the battery cell 1, a laminated battery cell is shown.
Each laminated battery cell 1 is shaped like a flat plate, and the heat exchanger plate 2 is sandwiched between the adjacent battery cells 1. The heat generated by an electrochemical reaction in the battery cells 1 transfers through the heat exchanger plate 2, reaches the end of the heat exchanger plate 2, transfers from the end to the cushioning member 3, and transfers from the cushioning member 3 to the metal case 5.

Moreover, the heat exchanger plate 2 is also sandwiched between the battery cell 1 and the cushioning member 4. The heat generated in the battery cells 1 transfers through the heat exchanger plate 2, reaches the cushioning member 4, and transfers from the cushioning member 4 to the metal case lid 6.

Since the temperature of the heat transferred to the metal case 5 and the metal case lid 6 is higher than an ambient temperature, an outward heat dissipation path 28 is formed and warms the circumambient air. By forming an air passage 27c flowing in the front-back direction of the battery module 100 on the side of the battery module 100 facing the housing side face lower part 5c and the metal case lid 6, the air to be warmed can be replaced with another, which makes it possible to enhance the cooling effect.

Moreover, as described earlier, in the substrate storage chamber 18 of Fig. 4, the air passage 27a is formed in the space between the detection circuit substrate 7 and the housing upper part 10 and the space between the detection circuit substrate 7 and the vertical separation wall 5a. As a result of the air passage 27a being formed around the detection circuit substrate 7, it is possible to cool the heat generated in the detection circuit substrate 7 efficiently.

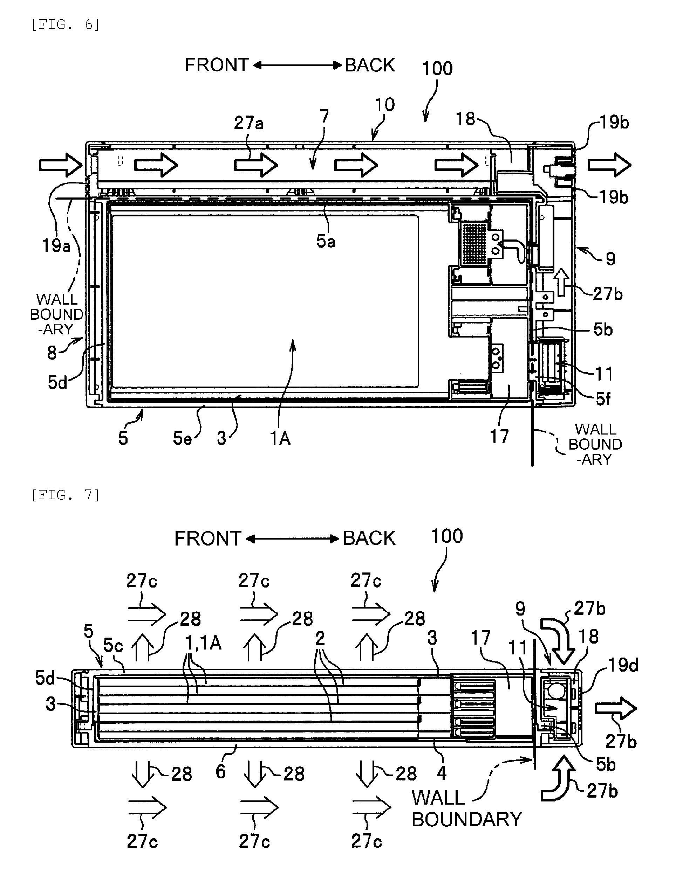

In Fig. 6, a sectional view taken in the direction C-C along an arrow of Fig. 2(b) is shown.
The first opening 19a in the front part is formed in the upper part of the housing front face part 8 and is provided in the upper part in front of the substrate storage chamber 18.
The second opening 19b in the rear part is formed in the upper part of the housing rear face part 9 and is provided in the upper part in back of the substrate storage chamber 18.

The first opening 19a in the front part, the detection circuit substrate 7, and the second opening 19b in the rear part are placed at almost the same level and are placed on a nearly straight line which is nearly horizontal. The air passage 27a is formed in such a way that the outside air (the air) enters through the first opening 19a in the front part and exits from the second opening 19b in the rear part, and the detection circuit substrate 7 is placed on the air passage 27a. As a result of the air drawing heat from the detection circuit substrate 7 while being replaced with another, a rise in the temperature of the detection circuit substrate 7 can be suppressed.

Moreover, above the protection circuit substrate 11 placed in the lower part, the upward air passage 27b is formed. The upstream side of the air passage 27b is formed as a result of the outside air (the air) flowing in through the third opening 19c (see Fig. 4) placed below the protection circuit substrate 11. The downstream side of the air passage 27b is formed as a result of the air flowing out through the second opening 19b in the upper part of the housing rear face part 9. As a result of the air moving through the air passage 27b drawing heat from the protection circuit substrate 11 while being replaced with another, a rise in the temperature of the protection circuit substrate 11 can be suppressed.

In Fig. 7, a sectional view taken in the direction A-A along an arrow of Fig. 2(a) is shown.
The battery cell group 1A dissipates heat by using the heat dissipation path 28 and the air passage 27c situated lateral to the battery module 100. The heat generated in the protection circuit substrate 11 is dissipated by using the air passage 27b (see Fig. 2 (b)) flowing in through the third opening 19c (see Figs. 4 and 2(a)) in the lower part of the housing rear face part 9 and flowing out through the third opening 19d. As described above, the battery cell group 1A and the protection circuit substrate 11 are cooled by cooling means that perform cooling by transferring heat to different routes.

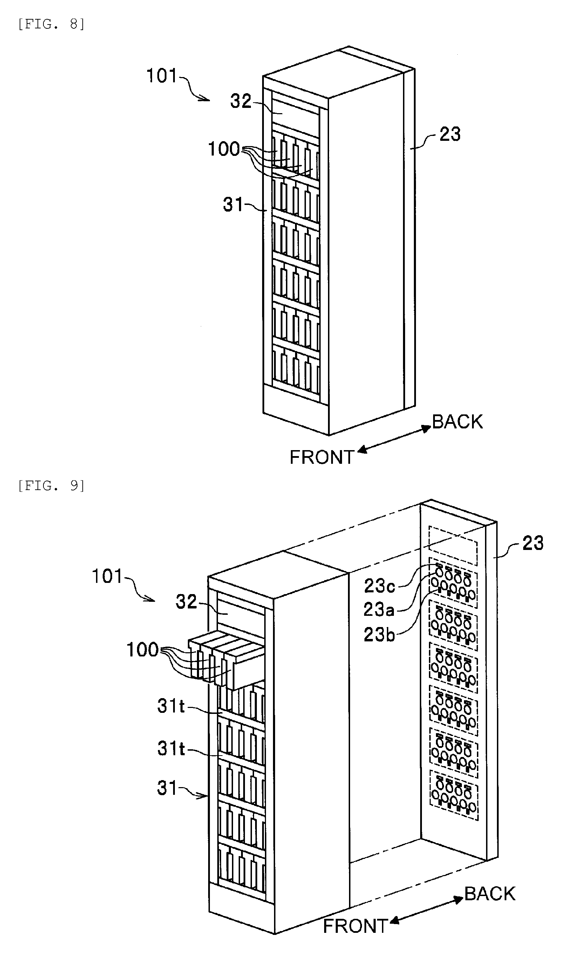

In Fig. 8, a perspective view of a battery system 101 with the battery modules 100 according to the first embodiment is shown.
The battery system 101 has a rack 31 with a multistage (in an example of Fig. 8, seven-tier) shelf. On the top tier of the rack 31, an integrated control unit 32 is placed. The integrated control unit 32 performs integrated control of the battery system 101.

In six tiers of the rack 31 other than the top tier thereof, the battery modules 100 are placed. In each tier of the rack 31, a plurality of (four in the example of Fig. 8) battery modules 100 are placed. On a rear face of the rack 31, the external wiring substrate 23 is provided.
Incidentally, the integrated control unit 32 may be disposed in a place other than the top tier of the rack 31, but, in consideration of trouble such as a leak of an electrolyte of the battery module 100, disposing the integrated control unit 32 on the top tier of the rack 31 is most desirable.

In Fig. 9, an exploded perspective view of the battery system 101 with the battery modules 100 according to the first embodiment is shown.
The battery module 100 is pushed backward into the rack 31, whereby the battery module 100 can be attached to the external wiring substrate 23 while being electrically connected thereto. Moreover, the battery module 100 is drawn frontward from the rack 31, whereby the battery module 100 can be removed from the external wiring substrate 23 and electrically disconnected therefrom.

The external wiring substrate 23 is provided with the fan 23a, the power connection terminal 23b, and the communication connection terminal 23c for each battery module 100.
By attaching the battery module 100 to the rack 31, it is possible to connect the power connection terminal 12 (see Fig. 2(b)) of the battery module 100 to the power connection terminal 23b of the external wiring substrate 23 and connect the communication connection terminal 13 (see Fig. 2(b)) of the battery module 100 to the communication connection terminal 23c of the external wiring substrate 23.

On the other hand, by removing the battery module 100 from the rack 31, it is possible to disconnect the power connection terminal 12 of the battery module 100 from the power connection terminal 23b and disconnect the communication connection terminal 13 of the battery module 100 from the communication connection terminal 23c.

Each battery module 100 is connected to the integrated control unit 32 via the communication connection terminal 23c of the external wiring substrate 23 and the wiring in the external wiring substrate 23. This connection allows the integrated control unit 32 to perform charge/discharge control on each battery module 100.

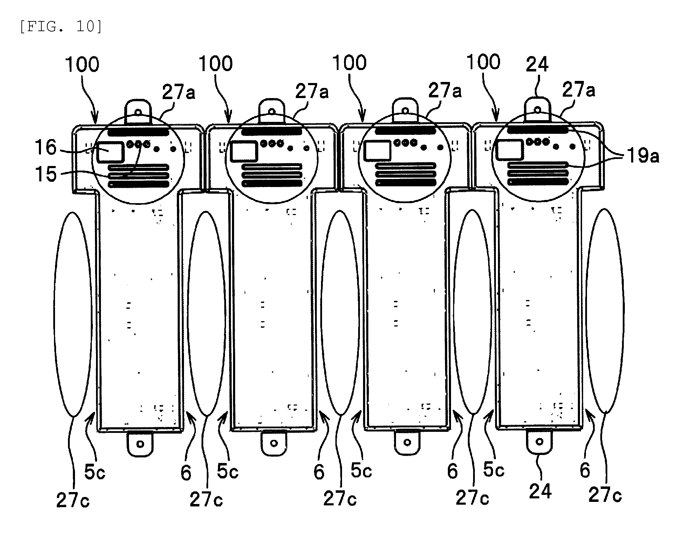

In Fig. 10, a front view of the plurality of battery modules 100 (in an example of Fig. 10, four battery modules 100 are shown) arranged in a state in which the battery modules 100 are placed in the battery system 101 is shown.
Each battery module 100 is pushed into the rack 31 until upper and lower stoppers 24 come into contact with upper and lower shelves 31t of the rack 31 (see Fig. 9) and unillustrated screws are placed through screw insertion holes provided in the stoppers 24, whereby the battery module 100 is fastened (screwed to) the shelves 31t of the rack 31 with screws.

Moreover, as described by using Fig. 2(b) showing the rear face of the battery module 100, the battery module 100 is formed roughly in the shape of the letter T in a front view, and the width W2 of the upper part of the battery module 100 is formed to be greater than the width W1 of the middle part and the lower part thereof.
In addition, in the upper part of the battery module 100 with a greater width W2, the substrate storage chamber 18 (see Fig. 5) is placed, and in the middle part and the lower part of the battery module 100 with a smaller width, the cell group storage chamber 17 (see Fig. 5) is placed.

As a result, as shown in Fig. 10, between the metal case lid 6 of the battery module 100 and the housing side face lower part 5c of the adjacent battery module 100, a space is created, making it possible to form the air passage 27c. Similarly, a space is also created between the metal case lid 6 of the battery module 100 and the rack 31, making it possible to form the air passage 27c. Moreover, a space is also created between the housing side face lower part 5c of the battery module 100 and the rack 31, making it possible to form the air passage 27c. Furthermore, at the front of the first opening 19a, the air passage 27a in the front-back direction on the plane of paper of Fig. 10 is formed.

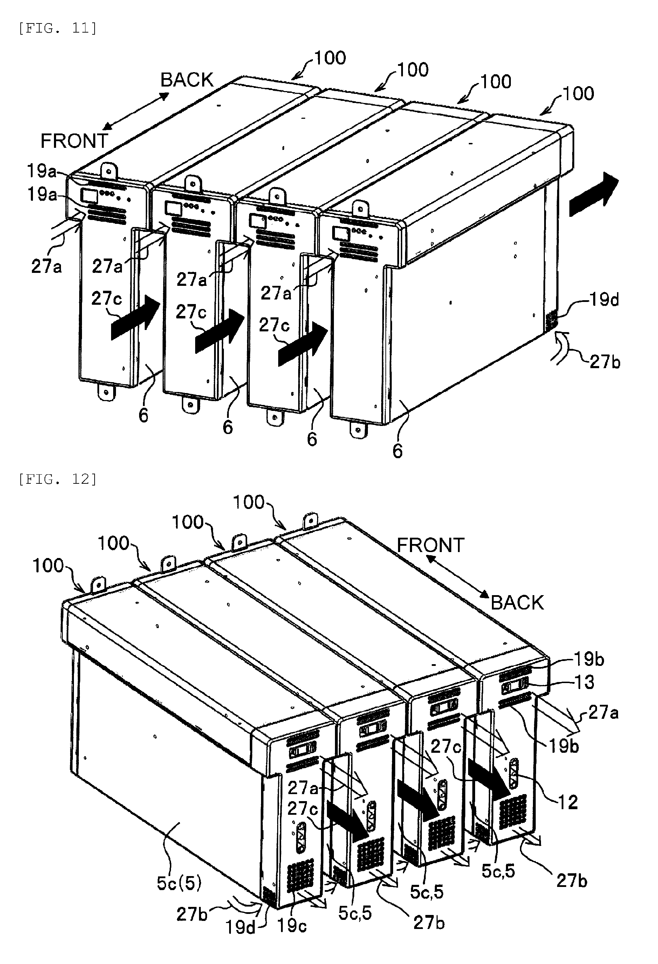

In Fig. 11, a perspective view of the plurality of battery modules 100 viewed obliquely from above from the front, the battery modules 100 arranged in a state in which the battery modules 100 are placed in the battery system 101, is shown, and, in Fig. 12, a perspective view of the plurality of similar battery modules 100 viewed obliquely from above from the rear is shown.
As shown in Figs. 10, 11, and 12, the air passage 27c is separated from the air passage 27a, and the air passages 27a and 27c are cooling means that perform cooling by transferring heat to different routes.

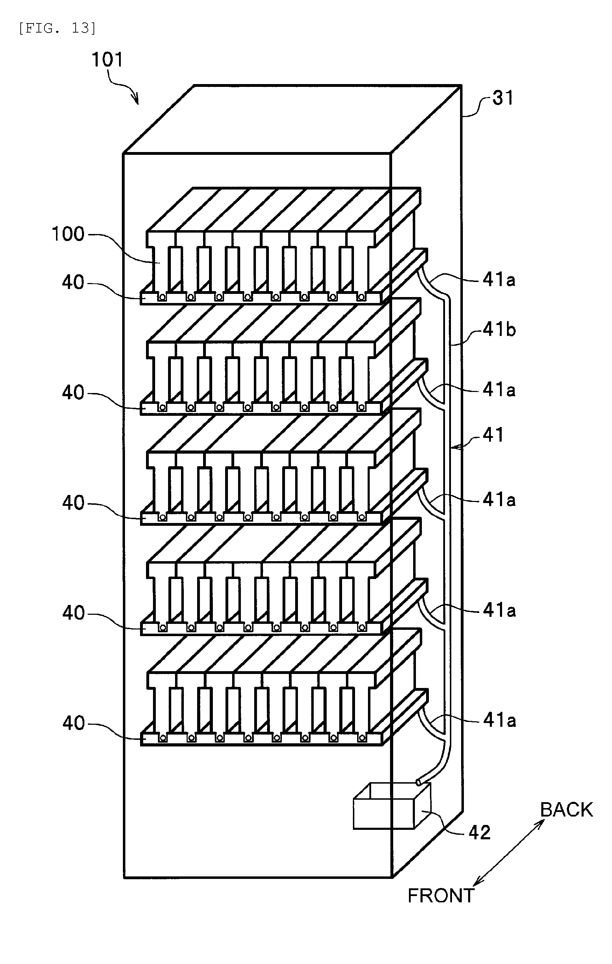

In Fig. 13, the internal structure of the rack 31 in which the battery modules 100 are placed is shown.
In the rack 31, a plurality of (tiers of) module placement bases 40 are placed in a vertical direction, and a plurality of battery modules 100 are placed side by side in a horizontal direction on each module placement base 40. Incidentally, the battery modules 100 shown in Fig. 13 are battery modules that are provided with no upper stopper 24, the battery modules whose vertical sizes are small.
Incidentally, the following structure can be applied to the shape of the battery module 100 shown in the drawings before Fig. 12.

Here, as shown in the drawings before Fig. 12, the battery module 100 with the upper and lower stoppers 24 is preferable to the battery module 100 with only the lower stopper 24 because this provides upper and lower portions at which the battery module 100 is fixed to the rack 31 and a stable structure that prevents the rotational movement with respect to the rack 31.

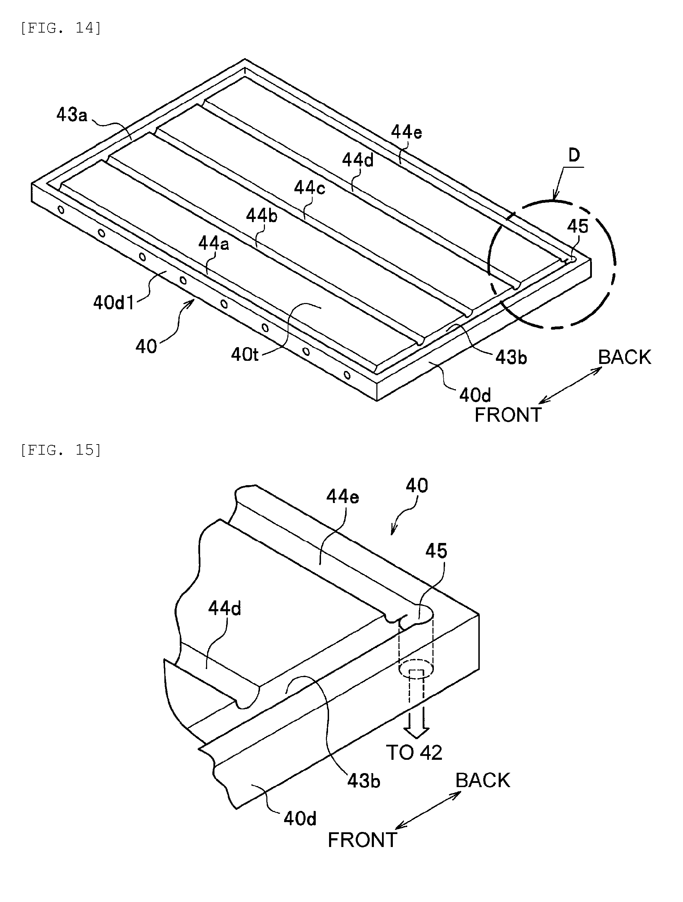

In Fig. 14, a perspective view of the module placement base 40 viewed obliquely from above is shown. In Fig. 15, an enlarged view of a D portion of Fig. 14 is shown.
The module placement base 40 has the following structure to recover the electrolyte safely when the electrolyte leaks from the battery module 100 for some reasons.

In the module placement base 40, to receive the leaked electrolyte, groove portions 43a and 43b linearly provided in a direction nearly parallel to the front-back direction of the rack 31 and groove portions 44a, 44b, 44c, 44d, and 44e linearly provided in a direction (a traverse direction) nearly perpendicular to the front-back direction of the rack 31 are provided in a flat plate-shaped bottom plate 40t. The groove portions 43a and 43b and the groove portions 44a to 44e are grooves having a concave shape in cross section.
In addition, in an area (a right rear corner) at which the groove portion 43b at a right side edge in the front-back direction and the groove portion 44e at a rear edge in the traverse direction intersect, an electrolyte receiving hole 45 that collects and recovers the electrolyte flowing into the groove portions 43a, 43b and 44a to 44e is provided in such a way as to penetrate the area in a vertical direction.

The groove portions 43a and 43b that are provided in the module placement base 40 and extends in the front-back direction have a structure in which the grooves become deeper as the groove portions 43a and 43b come closer to the groove portion 44e in a direction from the groove portion 44a (from the front to the rear), that is, the groove portions 43a and 43b come closer to the electrolyte receiving hole 45. Moreover, the groove portions 44a to 44e extending in the traverse direction also have a structure in which the grooves become deeper as the groove portions 44a to 44e come closer to the groove portion 43b on the right side in a direction from the groove portion 43a on the left side, that is, the groove portions 44a to 44e come closer to the electrolyte receiving hole 45.
In other words, the groove portions 43a and 43b in the front-back direction and the groove portions 44a to 44e in the traverse direction, which are provided in the module placement base 40, have a structure in which the groove portions are inclined to collect the electrolyte in the electrolyte receiving hole 45 by the action of gravity.

Incidentally, the groove portions 43a, 43b, and 44a to 44e may have a structure different from that described above and may have almost the same depth. However, making at least part of the groove portions 43a, 43b, and 44a to 44e deeper as the groove portion comes closer to the electrolyte receiving hole 45 is more preferable because doing so facilitates the flow of the electrolyte by the action of gravity. In this respect, a structure in which, as described above, all of the groove portions 43a, 43b, and 44a to 44e are made deeper as the groove portions come closer to the electrolyte receiving hole 45 is most desirable.

In addition, around the bottom plate 40t of the module placement base 40, that is, around the groove portions 43a and 43b in the front-back direction and the groove portions 44a to 44e in the traverse direction, a bank portion 40d (40d1) which is higher than the top face of the bottom plate 40t is provided in a standing manner.
The module placement base 40 is formed of metal having anticorrosion characteristics, such as a stainless steel sheet. Incidentally, it is preferable to provide the module placement base 40 with insulation properties by, for example, covering the surface with resin on the assumption that the electrolyte leaks. Moreover, the module placement base 40 may be formed of resin such as fiber reinforced thermo plastics (Fiber Reinforced Thermo Plastics) such as carbon fiber other than metal, and the material thereof is not limited to a particular material.

To the electrolyte receiving hole 45 provided in each module placement base 40, as shown in Fig. 13, an electrolyte collecting drain 41a is connected on the underside of the module placement base 40. Each electrolyte collecting drain 41a connected to the electrolyte receiving hole 45 of each module placement base 40 is connected to a downward drain 41b extending downward.

That is, a drain 41 for recovering the leaked electrolyte is formed of the electrolyte collecting drains 41a connected to the electrolyte receiving holes 45 and the downward drain 41b that makes the electrolyte recovered by the electrolyte collecting drains 41a flow downward to store the electrolyte. It is preferable that the drain 41 is formed of a flexible material that can be routed.
In a lower part in the rack 31, a recovery tray 42 for collecting and recovering the electrolyte leaked on each module placement base 40 is placed. In addition, a lower end of the downward drain 41b is put in the recovery tray 42.

With this structure, even when the electrolyte leaks from the battery module 100, the leaked electrolyte flows into the groove portions 43a, 43b, and 44a to 44e formed in the bottom plate 40t and is collected in the electrolyte receiving hole 45 from the groove portions 43a, 43b, and 44a to 44e.
Then, the electrolyte collected in the electrolyte receiving hole 45 passes through the electrolyte collecting drain 41a connected to the electrolyte receiving hole 45 provided in each module placement base 40 and flows into the downward drain 41b. The electrolyte flowing downward through the downward drain 41b then flows into the tray 42 and is stored therein.

With this structure, if the battery module 100 is broken down by an increase in stress that is more than breaking stress due to thermal expansion or external forces, the groove portions 43a, 43b, 44a, 44b, 44c, 44d, and 44e and the electrolyte receiving hole 45 which are formed in the module placement base 40 make it possible to recover the electrolyte leaked from the battery module 100 safely without allowing the electrolyte to get on the other battery modules 100.

Therefore, the leaked electrolyte does not pour out from the module placement base 40 and does not get on the other battery modules 100 situated below the battery module 100. This makes it possible to prevent a short circuit which occurs as a result of the electrolyte getting on the other battery modules 100 situated in the lower tiers than the battery module 100. For example, it is possible to prevent a short circuit in the power connection terminal 12, the communication connection terminal 13, the detection circuit substrate 7, and the like.

Incidentally, the depths of the groove portions 43a, 43b, and 44a to 44e shown in Fig. 14 may be almost the same depth from the top face of the bottom plate 40t. However, it is preferable to provide an inclination so that at least one of the groove portions 43a, 43b, and 44a to 44e becomes shallower as it comes closer to the electrolyte receiving hole 45 to make it easy for the leaked electrolyte to flow into the electrolyte receiving hole 45 by the action of gravity.
Moreover, in Fig. 13, the tray 42 having no lid is shown. However, it is desirable that the tray 42 is a case having a lid that closes the upper part of the tray 42. Incidentally, a structure provided with any one of a transparent lid and a transparent case or both is more desirable because this allows a visual check of the inside and immediate identification of an abnormality.

Moreover, as shown in Fig. 5, in the battery module 100, the cell group storage chamber 17 and the substrate storage chamber 18 are separately provided and the substrate storage chamber 18 is placed to as to be situated above the cell group storage chamber 17. Therefore, even when the electrolyte leaks from the cell group storage chamber 17 of the battery module 100 for some reasons, it is possible to prevent the electrolyte from adhering to the detection circuit substrate 7 placed in the substrate storage chamber 18 in the upper part. This makes it possible to prevent a short circuit or a break in the detection circuit substrate 7.

In addition, as shown in Figs. 8 and 13, since it is possible to recover the electrolyte leaked in a position lower than the integrated control unit 32 in the upper part of the rack 31, there is no possibility that the integrated control unit 32 is broken down as a result of the leaked electrolyte getting on the integrated control unit 32. Moreover, it is possible to recover the electrolyte in one area safely.
Furthermore, collecting the electrolyte in the tray 42 in one area in the lower part of the rack 31 eliminates the need to place a plurality of trays or electrolyte reservoir portions as in an existing example, which makes a footprint smaller and results in space savings.

As shown in Figs. 13 and 14, the electrolyte receiving hole 45 and the drain 41 are provided in the rear and the side of the rack 31 in such a way as to avoid contact with the power connection terminal 12 and the communication connection terminal 13 in the rear part (see Fig. 1(b)) of the battery module 100. With this structure, even when the electrolyte leaks from the battery module 100, it is possible to recover the electrolyte safely in the tray 42 without a short circuit in each connector or the like.

Here, although the positions of the electrical connections of the power connection terminal 12 and the communication connection terminal 13 of the battery module 100 and the position of the electrolyte receiving hole 45 are arbitrarily chosen, it is more desirable to place them in separated positions, for example, in different directions.
For example, a structure in which, unlike in the first embodiment, the power connection terminal 12 and the communication connection terminal 13 are provided in the front part of the battery module 100 is more preferable because the electrolyte receiving hole 45 in an area in which the leaked electrolyte is collected is in the rear part and the power connection terminal 12, the communication connection terminal 13, and the area in which the electrolyte is collected are positions that are separated from one another.

Moreover, as shown in Fig. 9, in the battery system 101, the fans 23a provided in the rear part of the rack 31 form a wind flow from the front of the rack 31 to the rear of the rack 31. Therefore, as in the first embodiment, by adopting a battery system in which the electrolyte receiving hole 45 is provided in the rear side of the rack 31 to recover the electrolyte, the electrolyte smoothly flows backward by the wind of the fans 23a, making it possible to recover the electrolyte in the electrolyte receiving hole 45 more reliably and smoothly.

Furthermore, since it is preferable that the electrical connections of the connectors (the power connection terminal 12, the communication connection terminal 13, and the like) for deriving power, for example, are situated in the front part due to the nature of work, it is desirable that, as described earlier, the electrical connections are placed in the front part and the electrolyte receiving hole 45 and the fans for cooling the battery modules 100 are placed in the rear part.

Next, modified examples of the groove portions of the module placement base 40 will be described.
Incidentally, although, in the first embodiment, the groove portions for recovering the electrolyte are formed as shown in Fig. 14, the formation of the groove portions is not limited to this example. The groove portions may be formed in any form as long as the groove portions can guide the electrolyte to the electrolyte receiving hole 45.

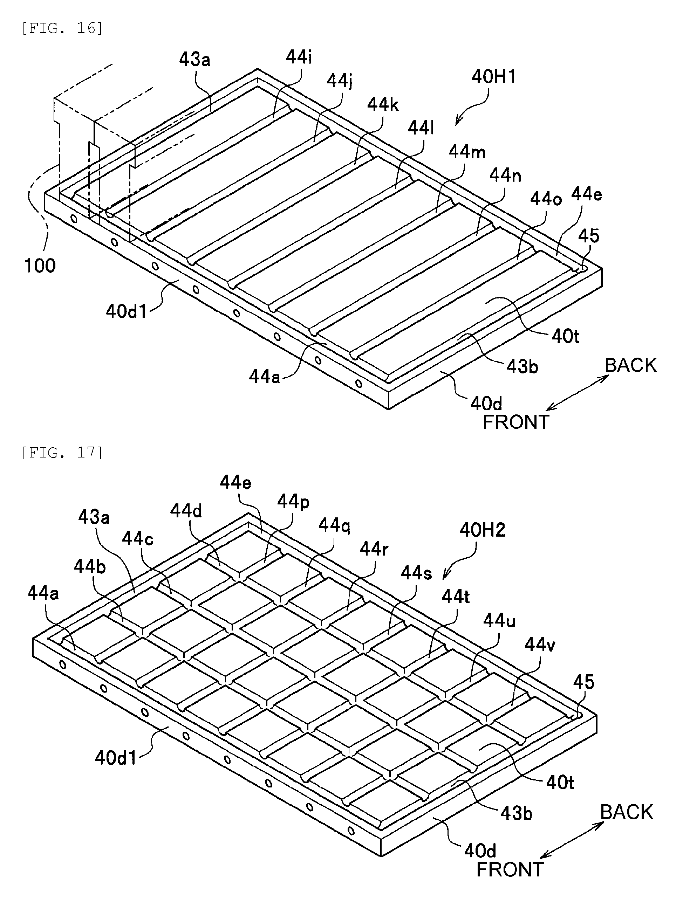

In Fig. 16, a perspective view of a module placement base 40H1 of Modified Example 1 is shown.
The module placement base 40H1 of Modified Example 1 is formed by being provided with groove portions 44i to 44o in the front-back direction in place of the groove portions 44b, 44c, and 44d (see Fig. 14) in the traverse direction of the module placement base 40 of the first embodiment.

In this case, providing the groove portions 44i to 44o in the front-back direction in positions along the peripheral face (the housing side face lower part 5c, the metal case lid 6 (see Fig. 1)) on the side of the battery module 100 (see chain double-dashed lines of Fig. 16) is more preferable because this makes it possible to receive the leaked electrolyte smoothly by the groove portions 44i to 44o. Likewise, the groove portions may be provided along the housing front face part 8 and the housing rear face part 9.

Also in Modified Example 1, as described earlier, advisably, an inclination is provided in such a way that at least part of the groove portions 43a, 43b, 44a, 44e, and 44i to 44o becomes lower as it comes closer to the electrolyte receiving hole 45. Incidentally, the groove portions 43a, 43b, 44a, 44e, and 44i to 44o can be formed to have almost the same depth.

In Fig. 17, a perspective view of a module placement base 40H2 of Modified Example 2 is shown.
The module placement base 40H2 of Modified Example 2 is formed by being provided with groove portions 44p to 44v extending in the front-back direction in addition to the groove portions 43a and 43b in the front-back direction and the groove portions 44a to 44e in the traverse direction of the module placement base 40 of the first embodiment.

Also in Modified Example 2, advisably, an inclination is provided in such a way that at least part of the groove portions 43a, 43b, 44a to 44e, and 44p to 44v becomes lower as it comes closer to the electrolyte receiving hole 45.
Incidentally, the groove portions 43a, 43b, 44a to 44e, and 44p to 44v can be formed to have almost the same depth.

In addition to those described above, the groove portions of the module placement base 40 may be formed in a radial fashion from the electrolyte receiving hole 45. Also in this case, although the groove portions may be formed to have almost the same depth, advisably, an inclination is provided in such a way that at least part of the groove portions becomes lower as it comes closer to the electrolyte receiving hole 45.

According to the structures described above, it is possible to implement the space-saving battery system 101 of high reliability that can recover the electrolyte safely even when the electrolyte leaks from various areas (parts) of the battery module 100.

### (Second Embodiment)

Next, a module placement base 40 of a second embodiment will be described.
The module placement base 40 of the second embodiment is configured such that, when the electrolyte leaks from a battery module 100, the battery module 100 from which the electrolyte leaked can be identified.

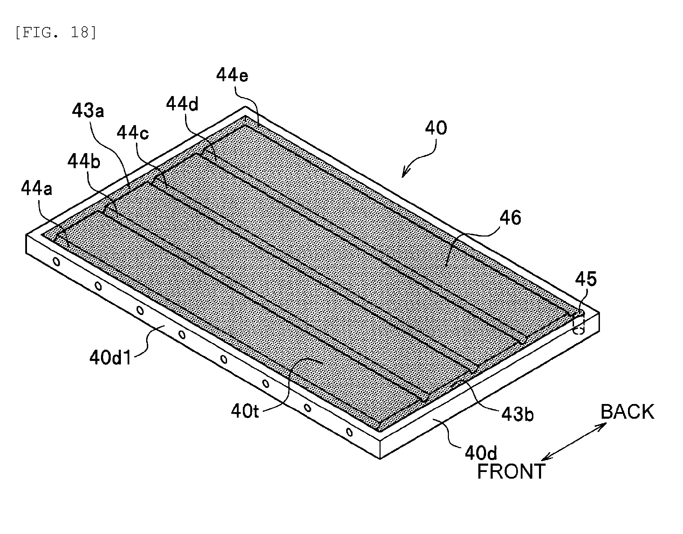

Fig. 18 shows the module placement base of the second embodiment according to the present invention. Incidentally, structures similar to those of the first embodiment are identified with the same numerals as in the first embodiment, and descriptions thereof will be omitted.

The second embodiment differs from the first embodiment in that a coated portion 46 is provided, the coated portion 46 obtained by applying a coating material to the top face of the bottom plate 40t in which the groove portions 43a, 43b, and 44a to 44e of the module placement base 40 are provided.

The coating material applied to the coated portion 46 is a coating material that is dissolved by an electrolyte which is an organic solvent. The coating material is not limited to a particular coating material as long as the coating material is dissolved by the electrolyte of the battery module 100. For example, coating materials which are dissolved by an electrolyte of a lithium-ion battery include a synthetic resin coating and a solvent coating material with fluorocarbon resin or acrylic resin as the main ingredient.
Incidentally, when it is difficult to recognize the dissolution of the coating material by the electrolyte, a colorant such as pigments may be mixed into the coating material. This makes it possible to recognize the leaked electrolyte more clearly.

According to the second embodiment, even when the battery module 100 is damaged by the thermal expansion or external stress and the electrolyte leaks therefrom, it is possible to identify the location of a leak reliably by a visual check. As a result, it is possible not only to recover the electrolyte reliably and safely but also to find (identify) reliably an area in which the electrolyte leaked because the area in which the electrolyte leaked is obvious.

### (Third Embodiment)

Next, a battery system 101 of a third embodiment will be described.
The battery system 101 of the third embodiment is obtained by placing the electrolyte receiving hole 45 in a position in which the electrolyte can be collected easily.

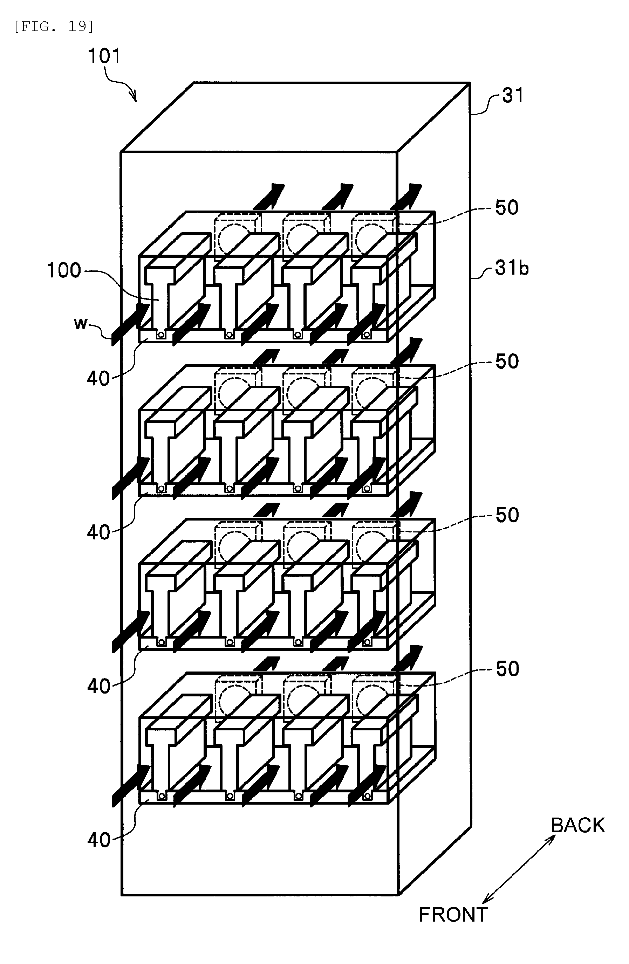

Fig. 19 shows the battery system 101 of the third embodiment according to the present invention.
In the battery system 101 of the third embodiment, fans 50 for cooling the battery modules 100 that generate heat by an electrochemical reaction are provided in the rear part of the rack 31.

When the battery system 101 is operated, a flow of cooling wind w is generated from the front part to the rear part of the rack 31 by the fans 50 provided in the rear part of the rack 40.
Therefore, by providing the electrolyte receiving hole 45 on a rear side 31b of the rack 31, that is, in any position in the groove portion 44be of the module placement base 40 of Fig. 14, the leaked electrolyte can flow smoothly backward by the cooling wind w, making it possible to recover the electrolyte more reliably.

Incidentally, providing the electrolyte receiving hole 45 at one end of the groove portion 44e of the module placement base 40 as shown in Fig. 14 is more desirable because this separates the electrolyte receiving hole 45 from the power connection terminal 12 and the communication connection terminal 13 of the battery module 100 and improves workability.

### (Fourth Embodiment)

Next, a battery system of a fourth embodiment will be described.

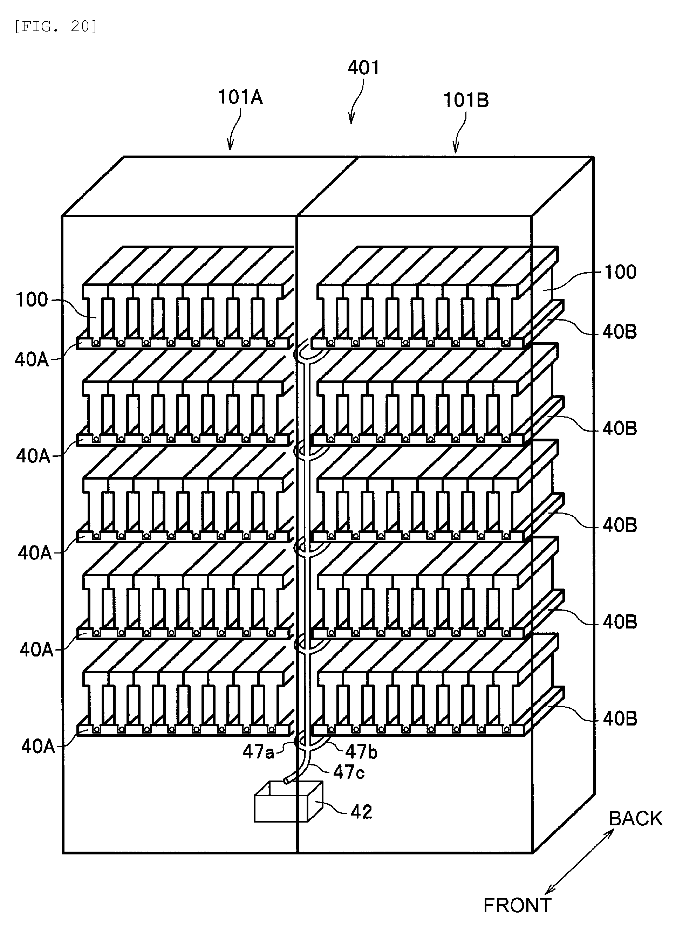

In Fig. 20, a perspective view of a battery system 401 of the fourth embodiment is shown.
The battery system 401 of the fourth embodiment has a structure in which battery systems 101A and 101B are arranged side by side in the traverse direction.
Since the other structures are the same as those of the first embodiment, similar component elements are identified with the same characters and detailed descriptions thereof will be omitted.

In the battery system 401 of the fourth embodiment, a first battery system 101A and a second battery system 101B are placed side by side in the traverse direction. Incidentally, in Fig. 20, a case in which the two battery systems 101A and 101B are arranged (placed) side by side in the traverse direction is shown as an example, but three or more battery systems may be arranged side by side in the traverse direction.

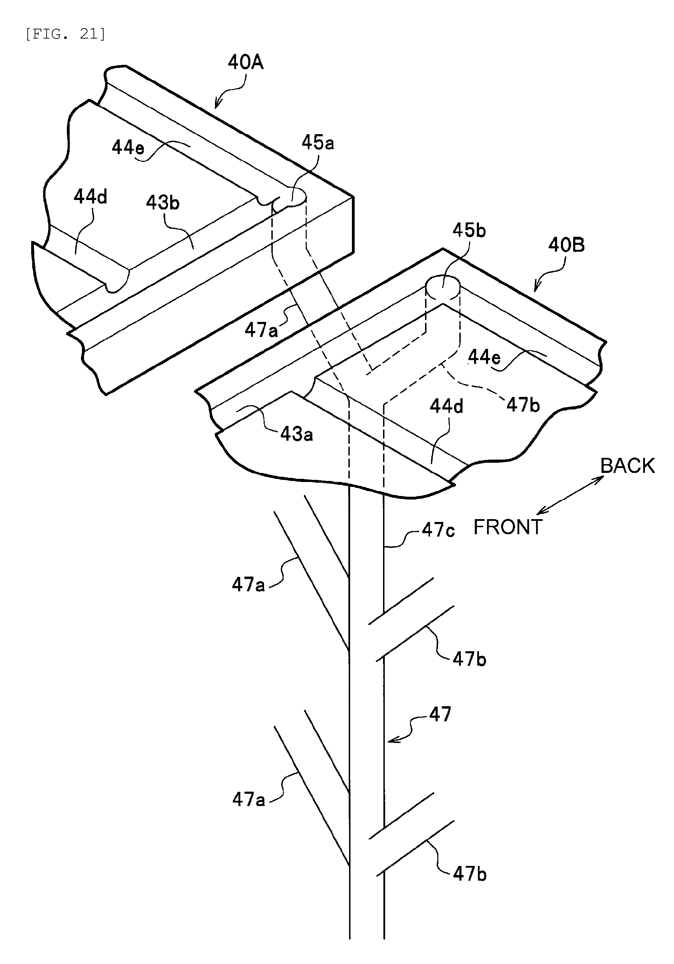

In Fig. 21, an enlarged perspective view of a module placement base 40A and an adjacent module placement base 40B of the fourth embodiment is shown. Incidentally, in Fig. 21, to facilitate understanding, only one of a plurality of tiers of module placement bases 40 in the vertical direction is shown.
In the module placement base 40A of the battery system 101A, an electrolyte receiving hole 45a that collects the electrolyte leaked from the battery module 100 is placed at one end which is close to the module placement base 40B, the one end in a groove portion 44e extending in the traverse direction at a rear edge.

On the other hand, in the module placement base 40B of the battery system 101B placed to be adjacent to the battery system 101A, an electrolyte receiving hole 45b that collects the electrolyte leaked from the battery module 100 is placed at one end which is close to the module placement base 40A, the one end in a groove portion 44e extending in the traverse direction at a rear edge.

In addition, a drain 47 that discharges the leaked electrolyte is formed of an electrolyte collecting drain 47a connected to a lower part of the electrolyte receiving hole 45a of the module placement base 40A, an electrolyte collecting drain 47b connected to a lower part of the electrolyte receiving hole 45b of the module placement base 40B, and one downward drain 47c to which the electrolyte collecting drain 47a and the electrolyte collecting drain 47b are connected. The downward drain 47c makes the leaked electrolyte flow downward to recover the electrolyte and stores the electrolyte in a tray 42 in the same manner as described above.
Incidentally, as described earlier, it is preferable that the drain 47 is formed of a material that can be flexibly routed.

According to the above structure, since the adjacent battery systems 101A and 101B can share the drain 47, production costs and assembly costs of the drain are reduced and cost reduction can be achieved.
Moreover, even when three battery systems 101 are placed in three directions (for example, in the directions of south, east, and west) on the floor, by providing the electrolyte receiving holes 45 of the battery systems 101 in positions close to one another, the battery systems 101 can share one drain having three electrolyte collecting drains provided in each tier of each module placement base 40 and one downward drain. In this case, casters may be provided in the rack 31 of each battery system 101 to facilitate movement.

Alternatively, even when four battery systems 101 are placed in four directions (for example, in the directions of north, south, east, and west) on the floor, by providing the electrolyte receiving holes 45 of the battery systems 101 in positions close to one another, the battery systems 101 can share one drain having four electrolyte collecting drains provided in each tier of each module placement base 40 and one downward drain. In this case, casters may be provided in the rack 31 of each battery system 101 to facilitate movement.

### (Fifth Embodiment)

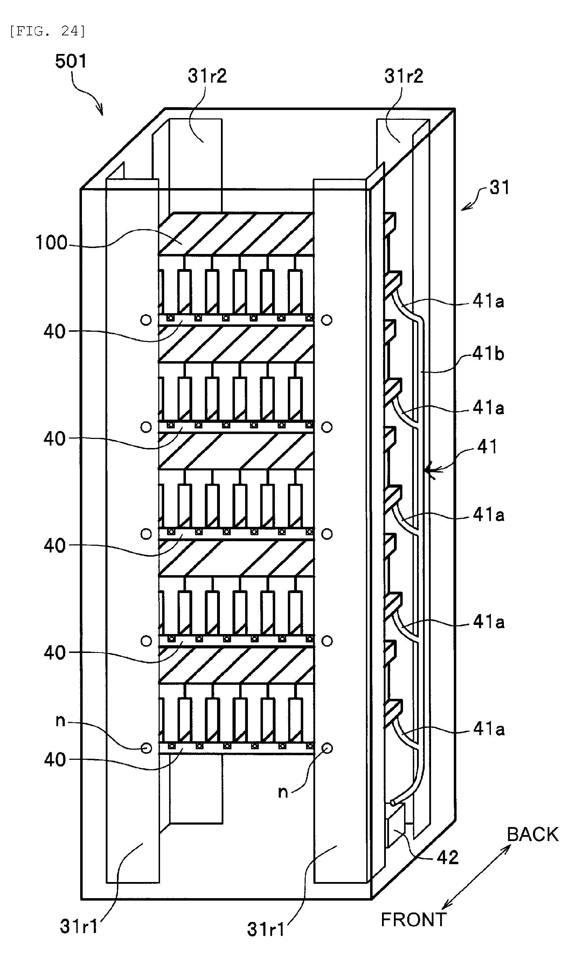

Next, a battery system 501 of a fifth embodiment will be described.

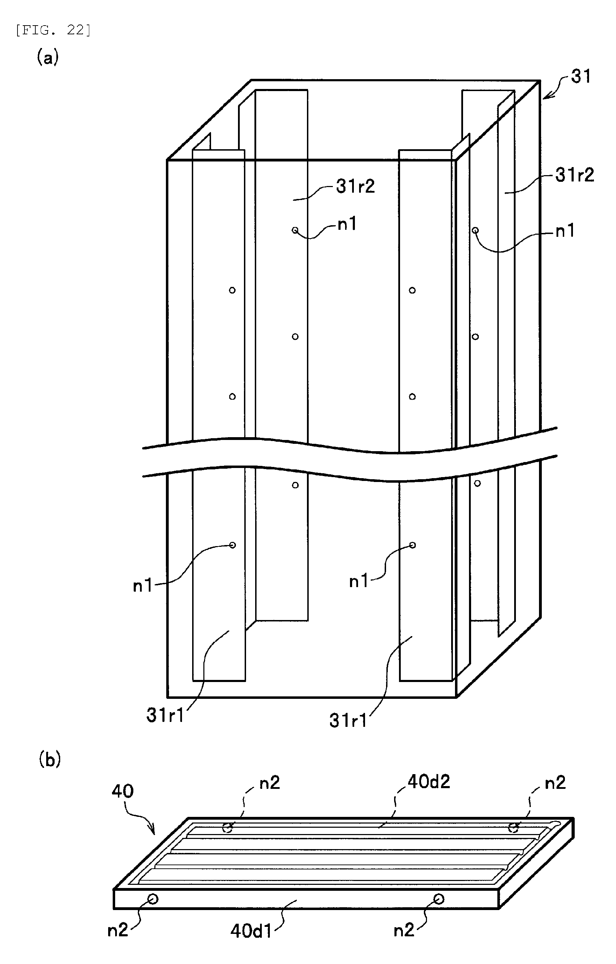

In Fig. 22(a), a perspective view of a rack 31 of the fifth embodiment is shown, and, in Fig. 22(b), a perspective view of a module placement base 40 of the fifth embodiment is shown.
The battery system 501 (see Fig. 24) of the fifth embodiment is a specific example of a method for attaching the module placement base 40 to the rack 31.
Since the other structures are the same as those of the first embodiment, similar component elements are identified with the same characters and detailed descriptions thereof will be omitted.

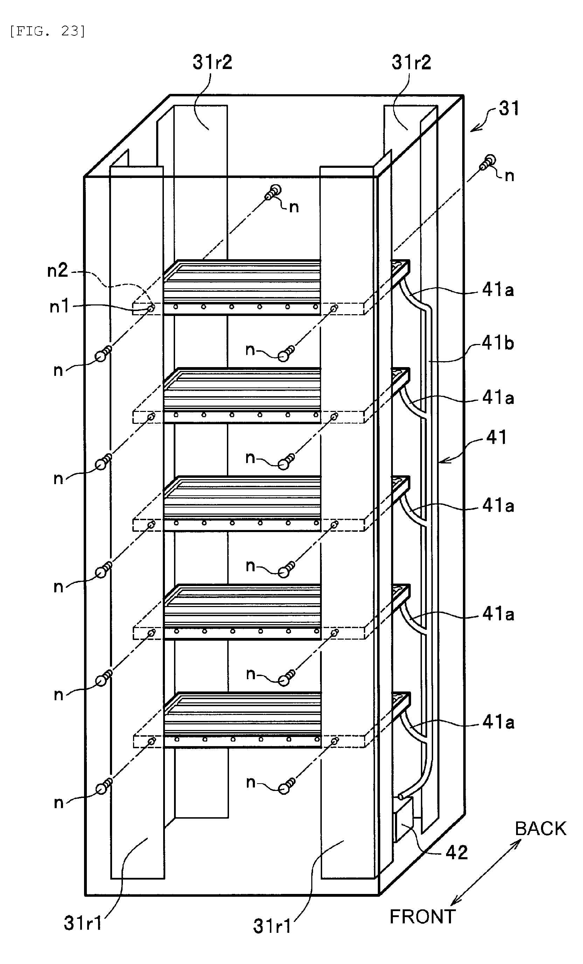

In the battery system 501 of the fifth embodiment, screw insertion holes n1 through which fixing screws n (see Fig. 23) for screwing down a plurality of tiers of module placement bases 40 are placed are provided in such a way as to pierce a pair of front rails 31r1 in the front part of the rack 31 and a pair of rear rails 31r2 in the rear part in predetermined positions in which the module placement bases 40 are firmly fixed.
On the other hand, in the module placement base 40 shown in Fig. 22 (b), a pair of internal threads n2 in which the fixing screws n engage is cut in each of the bank portion 40d1 in the front part and the bank portion 40d2 in the rear part.

In Fig. 23, a perspective view showing a state in which five tiers of module placement bases 40 are firmly fixed to the rack 31 of the fifth embodiment is shown.
As shown in Fig. 23, a pair of screws n such as bolts is placed, from the front side, through the screw insertion holes n1 in the pair of front rails 31r1 in the front part and is made to engage the internal threads n2 in the bank portion 40d1 in the front part of the module placement base 40. Moreover, a pair of screws n such as bolts is placed, from the rear side, through the screw insertion holes n1 in the pair of rear rails 31r2 in the rear part and is made to engage the internal threads n2 in the bank portion 40d2 in the rear part of the module placement base 40. In this way, the module placement base 40 in each tier can be fastened to the front rails 31r1 and the rear rails 31r2 with screws.

Each module placement base 40 to which the battery modules 100 are firmly fixed is fixed to the front rails 31r1 and the rear rails 31r2 in this manner, and the electrolyte collecting drains 41a of the drain 41 are connected to the electrolyte receiving holes 45b of the module placement bases 40 and the downward drain 41b is put in the tray 42, whereby the battery system 501 shown in Fig. 24 is completed.

Here, the battery modules 100 may be fixed before each module placement base 40 is fastened to the front and rear rails 31r1 and 31r2 of the rack 31 with screws, or the battery modules 100 may be fixed after each module placement base 40 is fastened to the front and rear rails 31r1 and 31r2 of the rack 31 with screws by reducing the width dimension (the dimension in the traverse direction) of the front and rear rails 31r1 and 31r2.

Alternatively, the battery modules 100 may be fixed before or after each module placement base 40 is fastened to the front and rear rails 31r1 and 31r2 of the rack 31 with screws by fastening each module placement base 40 to the front and rear rails 31r1 and 31r2 with screws from the transverse direction in place of the front-back direction by reducing the width dimension (the dimension in the traverse direction) of the front and rear rails 31r1 and 31r2.
Incidentally, in the fifth embodiment, a case in which the module placement bases 40 are fastened to the rack 31 with screws has been described as an example. However, a structure in which the module placement bases 40 are firmly fixed to the rack 31 by a method such as a one-touch structure other than a fastening method using screws may also be adopted.

### «Other Embodiments»

Incidentally, in the embodiments described above, a case in which the electrolyte receiving hole 45 is provided at a corner of the module placement base 40 has been described as an example, but the electrolyte receiving hole 45 may be placed in a location other than a corner, for example, an edge or a middle part. However, as described earlier, it is desirable that the electrolyte receiving hole 45 is placed at an edge of the module placement base 40 from the viewpoint of ease of discharge of an electrolyte and reliability. Moreover, when the module placement base 40 has a rectangular shape in a top view, it is most desirable to place the electrolyte receiving hole 45 at a corner as described in the embodiments.

Furthermore, a case in which the module placement base 40 has a virtually rectangular shape in a top view has been described as an example. However, other shapes may be adopted.
Incidentally, in the embodiments described above, a case in which the drain 41 is connected to the tray 42 to discharge the electrolyte has been described as an example. However, a structure in which, in place of the tray 42, a fixed drain hole is provided in a place of installation of a battery system to discharge the electrolyte into the drain hole may be adopted, or other methods for discharging the electrolyte from the drain 41 may be adopted. However, adopting a drain portion that allows a visual check, such as the tray 42, is most desirable because this allows a user (an administrator) to grasp an abnormality in the battery module 100 without delay and perform maintenance quickly.

Moreover, in the embodiments described above, a structure in which a five tiers of module placement bases 40 are firmly fixed to the rack 31 has been described as an example. However, a structure in which one tier or two to four or six or more tiers of module placement bases 40 are firmly fixed to the rack 31 may be adopted, and the number of tiers of the module placement bases 40 which are firmly fixed to the rack 31 can be appropriately chosen. Incidentally, as described earlier, placing a plurality of tiers of module placement bases 40 in the rack 31 and placing the battery modules 100 in such a way as to be stacked in a vertical direction is more preferable because this enhances energy efficiency per footprint.

Incidentally, in the embodiments described above, various structures have been described, but the structures may be appropriately combined. This makes it possible to obtain combined effects.

### Reference Signs List

- 1: battery cell
- 1A: battery cell group
- 2: heat exchanger plate (cell chamber heat dissipation portion)
- 3, 4: cushioning member (cell chamber heat dissipation portion)
- 7: detection circuit substrate (detection circuit)
- 8: housing front face part
- 9: housing rear face part
- 12: power connection terminal (electrical connection)
- 13: communication connection terminal (electrical connection)
- 16: debug connector
- 17: cell group storage chamber (battery cell storage portion)
- 18: substrate storage chamber (circuit storage portion)
- 21: voltage detection circuit (detection circuit)
- 23: external wiring substrate (external device)
- 23a: fan
- 31: rack (cabinet)
- 32: integrated control unit
- 40, 40H1, 40H2: module placement base
- 40A: module placement base (one module placement base)
- 40B: module placement base (the other module placement base)
- 41: drain (discharge pipe)
- 42: tray (electrolyte discharge portion)
- 44b, 44c, 44d: groove portion
- 44k, 441, 44m, 44n, 44°: groove portion
- 44p, 44q, 44r, 44s, 44t, 44u: groove portion
- 44i, 44j: groove portion (groove portion along a side peripheral face)
- 43a: groove portion (groove portion along a side peripheral face, groove portion provided at an edge of the module placement base)
- 43b: groove portion (groove portion provided at an edge of the module placement base, an edge of the module placement base)
- 44a: groove portion (groove portion provided at an edge of the module placement base)
- 44e: groove portion (groove portion provided at an edge of the module placement base, an edge of the module placement base)
- 45: electrolyte receiving hole
- 45a: 45a electrolyte receiving hole (electrolyte receiving hole of one module placement base)
- 45b: electrolyte receiving hole (electrolyte receiving hole of the other module placement base)
- 46: coated portion
- 47: drain (discharge pipe)
- 50: fan
- 100: battery module
- 101, 401, 501: battery system
- w: cooling wind

## Claims

1. A battery system comprising:
battery modules each having a plurality of battery cells; and
a cabinet that houses the battery modules,
wherein
the battery modules each include a battery cell storage portion housing the battery cells and a circuit storage portion placed above the battery cell storage portion, the circuit storage portion housing a detection circuit that detects information on the battery cells, and
the cabinet includes
a module placement base on which the battery modules are placed, the module placement base having groove portions that receive an electrolyte when the electrolyte leaks from the battery modules and an electrolyte receiving hole into which the electrolyte in the groove portions flows, and
a discharge pipe that is connected to the electrolyte receiving hole and discharges the electrolyte into an electrolyte discharge portion.

2. The battery system according to claim 1, wherein
at least part of the groove portions has an inclination in such a way that the groove portion becomes lower as the groove portion comes closer to the electrolyte receiving hole.

3. The battery system according to claim 1, wherein
the groove portions are provided in the direction of cooling wind cooling the battery modules.

4. The battery system according to any one of claims 1 to 3, wherein
the groove portions are provided in positions along a side peripheral face of the battery module.

5. The battery system according to any one of claims 1 to 3, wherein
the groove portions are provided at an edge of the module placement base.

6. The battery system according to any one of claims 1 to 3, wherein
the electrolyte receiving hole is provided at an edge of the module placement base.

7. The battery system according to claim 6, wherein
the electrolyte receiving hole is provided at an edge on the downstream side of cooling wind cooling the battery modules.

8. The battery system according to any one of claims 1 to 3, wherein
the electrolyte receiving hole is provided in a rear part of the module placement base, and
electrical connections of the battery modules are provided in a front part of the module placement base.

9. The battery system according to any one of claims 1 to 3, wherein
the battery modules are placed below an integrated control unit that performs integrated control of the battery modules.

10. The battery system according to any one of claims 1 to 3, wherein
the battery modules are placed side by side and a plurality of cabinets are placed side by side,
the electrolyte receiving hole of one module placement base is provided at an edge, and the electrolyte receiving hole of the other module placement base is provided at an edge close to the electrolyte receiving hole of the one module placement base, and
the discharge pipe is shared by the electrolyte receiving hole of the one module placement base and the electrolyte receiving hole of the other module placement base by being connected to the electrolyte receiving hole of the one module placement base and the electrolyte receiving hole of the other module placement base.
